(19) Europäisches Patentamt
European Patent Office
Office européen des brevets

(11) **EP 1 892 034 B1**

(12) **EUROPÄISCHE PATENTSCHRIFT**

(45) Veröffentlichungstag und Bekanntmachung des Hinweises auf die Patenterteilung:
**08.09.2010 Patentblatt 2010/36**

(51) Int Cl.:
*B01F 5/04* (2006.01)   *B01F 5/06* (2006.01)
*B29C 44/34* (2006.01)   *B29C 44/42* (2006.01)
*B29C 47/10* (2006.01)

(21) Anmeldenummer: **07112947.2**

(22) Anmeldetag: **23.07.2007**

(54) **Verfahren zur Herstellung einer Formmasse**

Method of producing molding material

Methode de production d'une masse déformable

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.08.2006 EP 06119390**

(43) Veröffentlichungstag der Anmeldung:
**27.02.2008 Patentblatt 2008/09**

(73) Patentinhaber: **Sulzer Chemtech AG**
**8404 Winterthur (CH)**

(72) Erfinder:
• **Schlummer, Christian**
**8003 Zürich (CH)**

• **Habibi-Naini, Sasan**
**8486 Rikon (CH)**

(74) Vertreter: **Sulzer Management AG**
**Patentabteilung / 0067**
**Zürcherstrasse 14**
**8401 Winterthur (CH)**

(56) Entgegenhaltungen:
| | |
|---|---|
| EP-A1- 0 856 353 | WO-A-92/17533 |
| DE-A1- 2 241 367 | GB-A- 989 855 |
| US-A- 2 848 739 | US-A- 5 935 490 |
| US-A1- 2004 080 065 | |

EP 1 892 034 B1

## Beschreibung

Die Erfindung betrifft ein Verfahren zur Herstellung einer Formmasse, um Additive kontinuierlich, quasikontinuierlich oder diskontinuierlich zu einer zähflüssigen, viskosen oder pastösen Masse, insbesondere einer Kunststoffschmelze zu dosieren.

Aus dem Stand der Technik ist gemäss DE 198 53 021 A1 oder US2004/0080065 bekannt, einem plastifizierten Polymer im Schneckenzylinder ein physikalisches Treibmittel zuzudosieren. Die Schnecke fördert dann das Polymer-Treibmittel-Gemisch gegen einen definierten Staudruck in den sogenannten Speicherzylinder. Nach Abschluss der Dosierphase wird die Schmelze aus dem Speicherzylinder mit hoher Geschwindigkeit in die Kavität eingespritzt. Das dosierte und in die Kavität eingespritzte Polymervolumen ist geringer als das Volumen der Kavität, was für ein Niederdruckverfahren charakteristisch ist. In diesem Fall wird das Formnest erst durch Aufschäumen der Schmelze komplett aufgefüllt, wobei der Aufschäumvorgang durch den Druckabfall der Schmelze entlang des Fliessweges ausgelöst wird. Die Werkzeuginnendrücke betragen dabei in der Regel weniger als 70 bar. Ein Nachteil des Niederdruckverfahrens gemäß DE 198 53 021 A1 ist die oftmals schlechte Oberflächenqualität der hergestellten Formteile. Um die Oberflächenqualität zu verbessern, kann ein sogenanntes Hochdruckverfahren eingesetzt werden, wobei mit Werkzeuginnendrücken von 100 bar gearbeitet wird.

Um die Oberflächenqualität der Formteile zu verbessern, wird daher in der DE 198 53 021 A1 vorgeschlagen, ein Hochdruckverfahren zur Herstellung geschäumter Formteile zu verwenden. Hierbei wird der gesamte Werkzeughohlraum mit dem Schmelze/Treibmittel-Gemisch gefüllt, wobei das Werkzeugvolumen kleiner als das Volumen des herzustellenden Formteils ist. In einer sich an die Einspritzphase anschliessenden Nachdruckphase werden Randschicht herzustellen. Das Aufschäumen wird durch die Vergrösserung des Werkzeughohlraums initiiert. Ein derartiges Hochdruckverfahren arbeitet mit einem Werkzeuginnendruck von 100 bar. Nachteilig an diesem Verfahren ist die Notwendigkeit, zur Erzielung einer guten Produktqualität speziell für ein bestimmtes Produkt konstruierte Werkzeuge verwenden zu müssen. Die erwähnte Vergrösserung des Werkzeughohlraums kann durch Verwendung eines Tauchkantenwerkzeugs oder durch Ziehen des Kerns erreicht werden. Die Herstellung derartiger Werkzeuge, insbesondere mit beweglichen Einsätzen, erfordert hohe Präzision. Eine Standard-Spritzgiessmaschine ist für die Herstellung von geschäumten thermoplastischen Formteilen unter Verwendung von sogenannten physikalischen Treibmitteln nicht ohne Modifikationen einsetzbar, da eine Vorplastifizierung zum Eintrag des Treibmittels in die Schmelze erforderlich ist. Diese treibmittelbeladene Schmelze wird mittels Kolbeneinspritzung in das Werkzeug eingebracht. Um ein physikalisches Treibmittel dosiert und homogen in den Schmelzestrom einzubringen, wird gemäss der DE 198 53 021 A1 das im Schneckenzylinder plastifizierte Polymer durch einen Ringspalt um einen im Schmelzekanal zentrierten Torpedo geleitet, dessen Aussenhülle aus Sintermetall gefertigt ist. Die äussere Begrenzung des Ringspalts wird durch einen Zylinder gebildet, der ebenfalls aus Sintermetall hergestellt ist. Das Treibmittel kann sowohl über die poröse Aussenhülle des Torpedos als auch über die Sintermetall-Oberfläche des Zylinders in die Schmelze eingebracht werden.

Anstatt des in der DE 198 53 021 A1 gezeigten Torpedos kann der Eintrag eines physikalischen, insbesondere gasförmigen Treibmittels über einen aus einem porösen Werkstoff bestehenden Zylinder erfolgen, der zwischen Plastifizierzylinder und Verschlussdüse der Spritzgiessmaschine montiert ist, wie in DE 101 50 329 A1 gezeigt wurde. Im Inneren des porösen Zylinders ist ein statisches Mischelement angeordnet, welches über in den Schmelzekanal hineinreichende Stege verfügt, die für eine Umlagerung der Schmelze und eine Durchmischung des zunächst noch inhomogenen Polymer/Treibmittelsystems während der Einspritzphase sorgen.

Der Einsatz des in der DE 101 50 329 A1 gezeigten porösen Zylinders, der mittels der Verschlussdüse in einer Bohrung der Druckkammer gehalten wird ist in Hochdruckverfahren problematisch, da der poröse Zylinder keine ausreichende Druckbeständigkeit aufweist.

Durch den Innendruck wird der Zylinder auf Zug beansprucht. Die Zugspannung sigma auf jeder der Stirnseiten des Zylinders beträgt:

$$\text{Sigma} = \frac{p}{(r_a^2/r_i^2 - 1)}$$

Die Zugspannung sigma in der Mantelfläche des Zylinders beträgt hingegen

$$\text{Sigma} = \frac{p}{(r_a/r_i - 1)}$$

Nun ist zwar der poröse Zylinder in der DE 101 50 329 A1 dargestellten Anordnung durch die stirnseitige Einspannung auf Druck vorgespannt. Da aber die grösste Zugbelastung gar nicht an den Stirnseiten, sondern entlang der in der DE 101 50 329 A1 geschnitten dargestellten Mantelfläche erfolgt, besteht die Gefahr des Versagens des Zylinders durch einen Riss entlang genau dieser Mantelfläche unvermindert weiter, wenn der Innendruck erhöht wird. Zusätzlich ist der Zylinder aus einem porösen Material aufgebaut, wodurch der Zylinder mechanisch nur beschränkt auf Zug belastbar ist.

Aus diesem Grund eignet sich die in der DE 101 50 329 A1 dargestellte Anordnung nicht oder nur in beschränktem Ausmass zur Dosierung eines Additivs, insbesondere eines Treibmittels im Rahmen eines Verfahrens, bei welchem zumindest in dem Abschnitt, in welchem die Dosierung erfolgt, ein hoher Betriebsdruck herrscht. Für die Anwendung in einem Verfahren, bei welchem die Dosierung bei einem niedrigen Betriebsdruck erfolgt, eignet sich auch insbesondere ein Ausführungsbeispiel nach EP06405129.5 (offenbart als EP-A-1 717 008), in welchem zur Vergrösserung der Eintragsoberfläche für das Treibmittel im Imprägnierungskörper eine Anzahl parallel zur Hauptströmungsrichtung eingebauter Dosierelemente vorgesehen sind. Die Dosierelemente sind im wesentlichen als poröse Hohlkörper ausgebildet, die von der Polymerschmelze durchströmt werden. Im Inneren der Hohlkörper können statische Mischelemente vorgesehen sein, die eine Homogenisierung des Treibmittels über den gesamten Polymerstrang, der durch den Hohlkörper fliesst, bewirken. Alternativ zu einer Strömung des Polymerstrangs durch die Hohlkörper, kann auch vorgesehen sein, dass das Polymer die Hohlkörper umströmt. Im Inneren des oder der Hohlkörper befindet sich das Treibmittel, welches über die Poren im Hohlkörper in die Polymerschmelze eingetragen wird, Sowohl bei Niederdruckverfahren, als insbesondere auch bei Hochdruckverfahren ist die soeben beschriebene Ausführungsform der Dosierelemente nur bedingt geeignet, da bei Spritzgiessverfahren auch bei niedrigen Kavitätsdrücken hohe Spritzdrücke auftreten können, die zum Versagen eines Dosierelements durch Rissbildung führen können.

Ein weiteres nicht gelöstes Problem stellt die Befestigung des statischen Mischelements an der Innenwand des porösen Zylinders dar. Durch die Befestigung des oder der Mischelemente werden zusätzliche Spannungen in den Zylindermantel eingeleitet. Die Grösse dieser Spannungen variiert zudem periodisch, weil es beim Einströmen der Schmelze in die Werkzeugkavität zum Druckabfall der unter Staudruck plastifizierten Schmelze kommt. Dadurch kommt es zu Druckschwankungen, die sich mit jedem Einspritzzyklus wiederholen, wodurch periodisch schwankende Kräfte in die im Stand der Technik bislang nicht offenbarten Befestigungselemente des statischen Mischers auf dem porösen Zylinder eingeleitet werden.

Die Dosierelemente können auch als poröse Lochplatten ausgebildet sein, wie in DE2241367, die ein Verfahren gemäß dem Oberbegriff des Anspruchs 1 offenbart, gezeigt ist. Mehrere dieser Lochplatten sind stromabwärts der Plastifizierschnecke derart hintereinander angeordnet, dass die Löcher, durch welche die Polymerschmelze hindurchtritt, gegeneinander versetzt sind. Die Lochplatten bestehen vollständig aus porösem Material und liegen aufeinander auf. Sie werden stromabwärts von einer Tragplatte gestützt, welche die Druckkräfte aufnehmen soll.

Es ist auch bekannt, Dosierelemente vorzusehen, welche mittels eines Einspritzventils flüssiges Treibmittel in die Polymerschmelze injizieren, wie in GB 989855 gezeigt ist.

Des weiteren ist es aus US2848739 bekannt, einen im Inneren einer hohlen, drehenden Schnecke eines Extruders angeordneten feststehenden Gasverteilungszylinder vorzusehen. Im Inneren des Gasverteilungszylinders befindet sich eine zentrale Bohrung, die eine Mehrzahl von Dosierelementen mit Treibmittel versorgt. Die Dosierelemente münden in einen mit Polymerschmelze gefüllten Ringraum, der von dem Gasverteilungszylinde und der Bohrung in der Schnecke begrenzt ist. In diesem Ringraum erfolgt der Kontakt der Polymerschmelze mit dem Treibmittel. Die treibmittelbeladene Polymerschmelze gelangt durch Bohrungen in der hohlen Schnecke in die sich ausserhalb der Schnecke befindende Polymerschmelze. Die Polymerschmelze und die treibmittelbeladene Polymerschmelze werden während der Förderung durchmischt und zu einer oder mehreren Düsen gefördert.

Eine Lösung für derartige Probleme kann die in der WO2004037510 A1 dargestellte Anordnung von Dosierelementen zur Beladung eines Polymerschmelzestroms mit einem physikalischen Treibmittel bieten. In der dort dargestellten Anordnung wird anstatt eines porösen Zylinders, der im Anschluss an den Schneckenkolben angeordnet ist, eine Serie von sogenannten dynamischen, also mit dem Schneckenkolben mitbewegbaren Mischelementen vorgesehen, über welche gleichzeitig der Treibmitteleintrag erfolgt.

Allerdings hat sich gezeigt, dass die Mischwirkung der Misch- und Dosierelemente für scher- und verweilzeitempfindliche Materialien nachteilig ist. Daher wurden gemäss EP06405123.8 (offenbart als EP-A-1 714 767) für derartige Materialien, wie z.B. LSR (liquid silicon rubber) Förderschnecken verwendet, die nur transportieren und nicht homogenisieren oder mischen.

Allen mit Hohlkörpern arbeitenden Dosierelementen zum Eintrag eines Treibmittels in eine Polymerschmelze ist gemeinsam, dass sie nur begrenzt gegen Druckbelastungen beständig sind.

Aufgabe der Erfindung ist es, ein Verfahren zur Herstellung eines Formteils bereitzustellen, welches als Hochdruckverfahren für scher-und verweilzeitempfindliche Medien betrieben werden kann.

Ein derartiges Verfahren zur Herstellung einer Formmasse aus einer Rohmaterialschmelze, die mit einem Additiv beladen wird, umfasst die Merkmale des Anspruchs 1.

Ein Dosierelement kann insbesondere aus einem porösen Material aufgebaut sein. Bei dem porösen Material kann es sich um ein Metall oder eine Keramik handeln, die in Hülsen- oder Stiftform ausgeführt ist. Stifte können wiederum in die Hülsenkontur eingesetzt werden und können zur Verbesserung der Mischwirkung auch in den von der Rohmaterialschmelze durchströmten Kanal, der von den Kanalabschnitten begrenzt wird, herausstehen. Das Dosierelement kann ummantelt sein oder auch als Teil eines statischen Mischelements ausgebildet sein. Die Porosität wird entsprechend dem zu dosierenden und dem zu beladenden Medium gewählt. Ein Dosierelement kann mit Beschichtungen versehen werden, um einerseits die mechanischen Materialeigenschaften zu verbessern, und andererseits die porösen Eigenschaften in Hinblick auf das durchströmende Medium zu verbessern.

In dem Kanalabschnitt, der die Dosiervorrichtung ausbildet und/oder in zumindest einem anschliessenden Kanalabschnitt erfolgt die Vermischung des Additivs mit der Rohmaterialschmelze durch zumindest ein Mischelement, welches insbesondere als statisches Mischelement ausgebildet sein kann.

Die Plastifizierung und/oder das Umwandeln des Rohmaterials in eine Rohmaterialschmelze erfolgt durch Wärmezufuhr zum Rohmaterial, insbesondere über eine Heizvorrichtung, welche insbesondere an der Aussenwand des Zylinders (5) angeordnet ist und/oder durch Eintrag von Wärmeenergie durch den Extruder.

Die Formmase wird nach der Dosierung des Additivs sowie einer intensiven Durchmischung entweder einer Spritzgiessmaschine zugeführt oder in einem kontinuierlichen Verfahren weiterverarbeitet, insbesondere einem Extrusionsverfahren, besonders bevorzugt einem Blasextrusionsverfahren, einem Extrusionsblasformverfahren, einem Blasfolienextrusionsverfahren, einem Profilextrusionsverfahren, einem Folienextrusionsverfahren, einem Rohrextrusionsverfahren, einem Plattenextrusionsverfahren oder einem Schaumextrusionsverfahren oder einem Verfahren zur Herstellung von Flüssigsilikonkautschuk (LSR). Alternativ dazu kann die Formmasse in einem Kombinationsverfahren von Spritzgiessverfahren und Extrusionsverfahren insbesondere in einer Shot-Pot Maschine zu einem Formteil verarbeitet werden. Die Formmasse wird in einer Einspritzeinheit kontinuierlich zu einem Strang verarbeitet oder batchweise in eine Kavität eines formgebenden Werkzeugs eingespritzt, um Formteile herzustellen. Die Einspritzeinheit umfasst einen Kompressions- und/oder Volumenspeicherraum, in welchem ein Förderkolben derart bewegt wird, dass die Grösse des Kompressions-und/oder Volumenspeicherraums periodisch verändert wird.

Im Anschluss an die Dosiervorrichtung wird zumindest eine Verbindung vorgesehen, in welcher eine Dosierung der Formmasse erfolgt. Die Verbindung steht in Fluidkontakt mit einem in einem Förderzylinder hin- und herbeweglichen Förderkolben, sodass in der Formmasse ein Druck aufgebaut werden kann. Die Geschwindigkeit der Einspritzung der Formmasse in die Kavität eines formgebenden Werkzeugs und/oder der einzuspritzende Volumensstrom der Formmasse wird mittels einer Düse, die insbesondere als Drosseldüse ausgebildet ist, gesteuert.

Ein Verfahren zur Herstellung eines geschäumten Formteils umfasst insbesondere die Schritte: Aufschmelzen eines Polymergranulats in einem Extruder zu einer Rohmaterialschmelze, Fördern der Rohmaterialschmelze in die Dosiervorrichtung, Zuführen eines Additivs, insbesondere eines Treibmittels zur Rohmaterialschmelze in der Dosiervorrichtung, Vermischen des Additivs mit der Rohmaterialschmelze, wobei während des Vermischens der Druck kontinuierlich erhöht wird, indem die Schmelze kontinuierlich gegen eine geschlossene Düse, insbesondere eine Nadelverschlussdüse, gefördert wird, die eine Eintrittsöffnung in eine Kavität eines formgebenden Werkzeugs verschliesst, wobei die Düse bei Erreichen des Einspritzdrucks öffnet oder geöffnet wird, um den Weg für die Formmasse in die Kavität freizugeben, bis die Formmasse die Kavität ausfüllt und der Druck der Formmasse soweit absinkt, sodass das in der Formmasse gelöste Treibmittel expandiert und ein geschäumtes Formteil entsteht. Das Additiv umfasst ein physikalisches Treibmittel, welches insbesondere in gasförmigem, flüssigem oder überkritischem Zustand in die Dosiervorrichtung eintritt. Das Additiv tritt in einen die Dosiervorrichtung umgebenden Ringkanal unter Druck ein und wird durch Dosierelemente, die insbesondere Kapillaren enthalten oder aus porösem Material aufgebaut sind, mit der vorbeiströmenden Rohmaterialschmelze in Kontakt gebracht.

Eine Verwendung des Verfahrens ergibt sich insbesondere zur Herstellung von Formteilen aus LSR und/oder zur Herstellung von Formteilen und/oder Folien oder Strangmaterial oder Hohlkörpern aus Elastomeren und/oder aus thermoplastischen Kunststoffen. Eine weitere mögliche Verwendung des Verfahrens betrifft das Wachsschäumen und oder die Verarbeitung von Lebensmitteln, beispielsweise Schokolade.

Nachfolgend wird die Erfindung anhand der Zeichnungen erläutert. Es zeigen:

Fig. 1    eine Vorrichtung zur Herstellung eines Formteils aus einer flüssigen, viskosen oder pastösen Formmasse

Fig. 2    zeigt ein weiteres Ausführungsbeispiel einer Vorrichtung zur Herstellung eines Formteils aus einer flüssigen, viskosen oder pastösen Formmasse

Fig. 3    zeigt ein drittes Ausführungsbeispiel einer Vorrichtung zur Herstellung eines Formteils aus einer flüssigen, viskosen oder pastösen Formmasse

Fig. 4a    zeigt einen Längsschnitt eines ersten Ausführungsbeispiels einer Dosiervorrichtung von Additiven zu zähflüssigen Fluiden oder pastösen Massen

Fig. 4b    zeigt einen Schnitt normal zur Hauptströmungsrichtung der Dosiervorrichtung nach Fig. 4a

Fig. 5a    zeigt ein zweites Ausführungsbeispiel einer Dosiervorrichtung mit Ringspalt

Fig. 5b    zeigt einen Schnitt normal zur Hauptströmungsrichtung der Dosiervorrichtung nach Fig. 5a

Fig. 6    zeigt einen Längsschnitt durch ein weiteres Ausführungsbeispiel für eine Dosiervorrichtung mit Dosierelementen mit länglicher Struktur und Mischelementen in der Dosiervorrichtung

Fig. 7    zeigt ein Dosierelement, das in ein Mischelement integriert ist

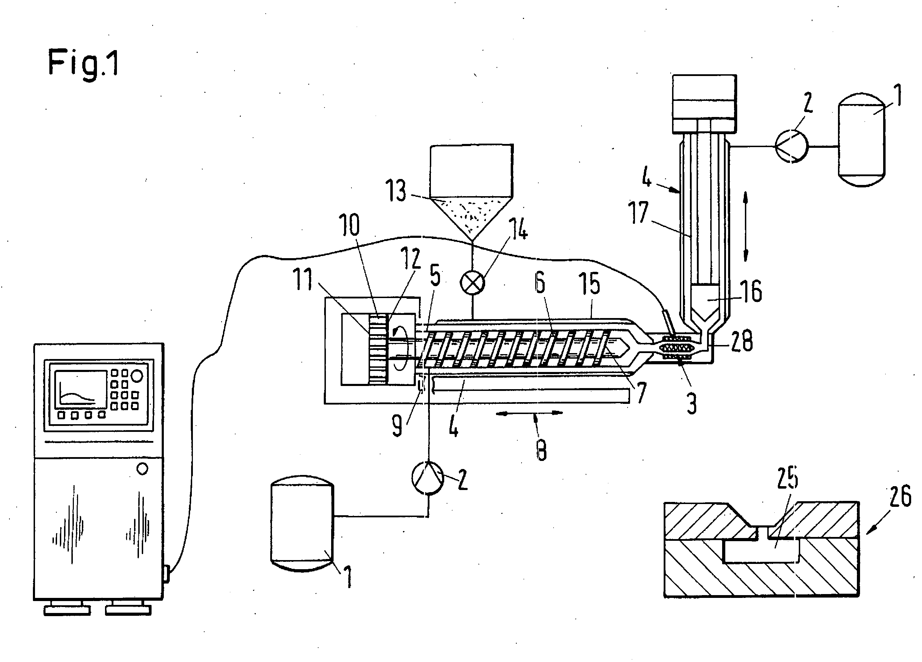

In Fig. 1 ist ein erstes Ausführungsbeispiel für eine Vorrichtung zur Dosierung eines Treibmittels in ein flüssiges, viskoses oder pastöses Medium gezeigt. Bei dem flüssigen Medium handelt es sich insbesondere um eine Flüssigkeit mit hoher Viskosität, wie beispielsweise eine Polymerschmelze.
Ein pastöses Medium umfasst beispielsweise ein LSR-Polymersystem. LSR steht dabei für "liquid silicon rubber", also einen flüssigen Silikonkautschuk. LSR ist ein Zweikomponenten-Polymersystem, dessen Komponenten einzeln nicht reaktionsfähig sind und das im Handel mit vorgebbar eingestellten Eigenschaften angeboten wird. Die LSR-Komponenten liegen für die Verarbeitung zu einem Formteil als pastöse Massen vor. Sie werden mittels spezieller Pump-, Dosier- und Mischtechnik zu einer Formmasse vereinigt. Durch Mischen der Komponenten und unter Erhöhung der Temperatur (150 bis 200°C) laufen in der Formmasse Vernetzungreaktionen ab. Diese Reaktion erfolgt beispielsweise als platinkatalysierte Additionsvernetzung, bei der ein Polysiloxan mit einem Vernetzer, bestehend aus kurzen Polymerketten, und unter Einfluss des Platinkatalysators reagiert. Der Vernetzer und der Katalysator sind partielle Mittel zur Durchführung der Vernetzungsreaktion, wobei die zwei Komponenten unter Einfluss des Vernetzungsmittels eine Formmasse ausbilden. Dabei wird der Vernetzer mit dem Polysiloxan und dem Pt-Katalysator zugeführt.
Ein weiteres Anwendungsgebiet ist die Verarbeitung von schäumbaren Polymerschmelzen. Eine derartige Polymerschmelze wird zumeist durch Wärmezufuhr aus einem Granulat erhalten, wobei das Granulat vorteilhafterweise durch einen Zylinder, der in der Literatur auch als Plastifizierzylinder bezeichnet wird, gefördert wird, der gegebenenfalls mit Heizvorrichtungen ausgestattet ist. Im Zylinder wird somit ein Granulat in eine Schmelze, das heisst, in ein fliessfähiges Medium umgewandelt. Dem fliessfähigen Medium wird ein Additiv zugesetzt, das heisst eine gasförmige oder flüssige Substanz, bei welchem es sich insbesondere um ein Treibmittel, bevorzugt ein physikalisches Treibmittel, einen Farbstoff, einen pharmazeutischen Wirkstoff, ein Verarbeitungshilfsmittel, eine Substanz zur Behandlung von Wasser, oder auch ein Füllstoff, wie Kreide, Talkum oder einen Faserstoff, insbesondere eine Langglasfaser, handeln kann, bevor es als Formmasse in einem Extrusionsverfahren kontinuierlich weiterverarbeitet wird oder batchweise in einem Spritzgiessverfahren zu einem zumindest teilweise geschäumten Formteil weiterverarbeitbar ist. Als Formmasse soll in der Folge fliessfähiges Medium, insbesondere Schmelze bezeichnet werden, welchem bereits ein Additiv beigemischt worden ist.
Diese Formmasse kann einer Spritzgiessmaschine zugeführt werden, um in eine Form mit den Abmessungen des zu erstellenden Formteils eingespritzt und zu festen Polymerformteilen verarbeitet zu werden Für den vorliegenden Fall soll ein Spritzgiessverfahren als diskontinuierliches Verfahren angesehen werden, da die Dosierung der Formmasse in eine Kavität eines formgebenden Werkzeugs diskontinuierlich erfolgt. Nach einem weiteren Ausführungsbeispiel wird die Formmasse erst in der Spritzgiessmaschine erzeugt. In diesem Fall ist die Dosiervorrichtung direkt in der Spritzgiessmaschine angeordnet. In diesem Fall kann die Dosierung eines Additivs kontinuierlich erfolgen, sodass das Spritzgiessverfahren für diese Anwendung als kontinuierliches Verfahren in Bezug auf die Wirkungsweise der Dosiervorrichtung aufgefasst werden kann.
Alternativ dazu wird die Formmasse in einem kontinuierlichen Verfahren weiter verarbeitet, beispielsweise in einer Blasfolienextrusion, Profilextrusion, Folienextrusion, Rohrextrusion, Plattenextrusion, im Extrusionsblasformen oder in einer Schaumextrusion.

Auch in einem Kombinationsverfahren, welches ein Spritzgiessverfahren und einen Extruder umfasst, kann die erfindungsgemässe Dosiervorrichtung eingesetzt werden. Für ein derartiges Kombinationsverfahren kommt insbesondere eine sogenannte "Shot-pot" Maschine zum Einsatz, bei der es sich um eine Kombination eines Extruders mit einer Spritzgiessmaschine handelt. Mittels der Dosiervorrichtung kann insbesondere ein physikalisches Treibmittel im und/oder nach dem Extruder zudosiert werden.

Shot-pot Maschinen werden beispielsweise in folgenden Anwendungen eingesetzt: Spritzgiessen von PET Preforms, Spritzgiessen von Formteilen mit hohen Schussgewichten, Schaumpritzgiessen, IMC (injection moulding compounder).

Shot-pot Maschinen weisen unter anderem folgende Vorteile auf: der Einspritzvorgang kann sehr präzise erfolgen, da nur geringe verfahrensbedingte Leckageströme entstehen. In weiterer Folge können hohe Einspritzgeschwindigkeiten realisiert werden. Die Einspritzeinheit, umfasst in den meisten Fällen einen Kompressionsraum und/ oder Volumenspeicherraum und einen Förderkolben zur Kompression und zum Ausschieben der Formmasse, durch welchen die Grösse des Kompressionsraums und/oder Volumenspeicherraums variierbar ist. Einspritzeinheit und Dosiervorrichtung sind bei Shot-pot Maschinen entkoppelt, wodurch beispielsweise beim IMC ein Doppelschneckenextruder mit hoher Plastifizierleistung und bei gleichzeitig geringen, auf die Formmasse wirkenden Scherkräften einsetzbar ist. Aus diesem Grund eignen sich Shot-pot Maschinen für Materialien, die empfindlich auf Scherkräfte reagieren. Ein weiterer Vorteil der Shot-pot Maschine liegt in ihrer Eignung zum Spritzguss von geschäumten Formteilen, dem Schaumspritzgiessen, die durch die Kombination eines Extruders mit einer Spritzgiessmaschine bedingt ist. Ein weiterer Vorteil der Verwendung eines Extruders, insbesondere eines Doppelschneckenextruders liegt darin, dass im Extruder eine Compoundierung erfolgen kann. Somit kann mit der Shot-pot Maschine eine Kombination von Compoundierung und Verarbeitung der compoundierten Masse zu einem Formteil erfolgen. Durch die Kombination der beiden Verfahrensschritte in einer Shot-pot Maschine wird eine erhöhte Flexibilität der Herstellung von Formteilen erreicht. Die Compoundierung kann nach Bedarf erfolgen, sodass die Abhängigkeit von der Lieferung bereits compoundierter Massen wegfällt. Zudem besteht das Risiko, dass compoundierte Massen bei Lagerung Alterungsprozessen ausgesetzt sind, weil derartige Mischungen je nach Zusammensetzung nur in begrenztem Ausmass lagerfähig sind.

Für die Compoundierung wird insbesondere ein Doppelschneckenextruder eingesetzt, durch welchen geringe Scherkräfte in die zu extrudierende Masse oder die zu extrudierenden und zu mischenden Einzelkomponenten eingeleitet werden. Mittels eines Doppelschneckenextruders können vorteilhafterweise auch Faserstoffe in die Masse eingemischt werden, insbesondere Fasern, die als sogenannte Rovings vorliegen. Durch die geringen Scherkräfte wird der Bruch und somit die Verkürzung von Fasern in vermehrtem Ausmass vermieden, sodass die durchschnittliche Faserlänge gegenüber dem Stand der Technik wesentlich erhöht ist. In der Folge ergeben sich für die faserverstärkte Masse verbesserte Festigkeitswerte, da die Materialfestigkeit mit zunehmender Faserlänge zunimmt.

Nach einer vorteilhaften Ausgestaltung einer Anlage zur Herstellung von Formteilen aus mehreren, in dem in Fig. 1 dargestellten Fall, zwei Komponenten ist für jede der Komponenten ein Reservoir 1 vorgesehen, aus welchem sie über eine Fördervorrichtung 4 in eine Dosiervorrichtung eingespeist werden. Eine derartige Fördervorrichtung 4 kann als Pumpe 2 ausgeführt sein. Eine Fördervorrichtung 4 kann als Zylinder 5 ausgeführt sein, in welchem sich eine drehbare Schnecke 6 auf einem Schneckenkolben 7 befindet. Derartige Fördervorrichtungen können je nach Anzahl der Komponenten und deren physikalischen Eigenschaften, insbesondere deren Viskosität beliebig kombiniert werden. Die in Fig. 1 dargestellte Anlage kann zur Elastomerverarbeitung eingesetzt werden, wobei sie insbesondere für das Schäumen von Elastomeren verwendet werden kann. In diesem Anwendungsbeispiel kann die gesamte Fördervorrichtung Hin- und Herbewegungen ausführen, wodurch die Fördervorrichtung beliebig von den anderen Anlagenteilen an- und abkoppelbar ist. Diese Hin- und Herbewegung soll durch Pfeile 8 angedeutet werden.

Zusätzlich können Schnecke und Schneckenkolben zur verbesserten Förderung einer fluiden, viskosen, zähflüssigen oder pastösen Masse eine Oszillationsbewegung im Zylinder 5 ausführen. Zur Ausführung einer Oszillationsbewegung weist der Schneckenkolben 7 an dem Ende, an welchem sich der Eintrittsstutzen 9 des Fluids oder der pastösen Masse befindet, einen Kolben 10 mit einem relativ zum Schneckenkolbenquerschnitt vergrösserten Querschnitt auf. Die beiden gegenüberliegenden Stirnflächen des Kolbens 10 können mit einem Druckmedium wechselseitig beaufschlagt werden, wodurch eine Oszillationsbewegung im Schneckenkolben erzeugbar ist. Ein derartiger drehbarer und/oder oszillierender Schneckenkolben kommt insbesondere zum Einsatz, wenn die zu fördernde Komponente als ein zähflüssiges Fluid oder eine viskose, pastöse oder fliessfähige Masse oder als Granulat oder als Elastomerstreifen vorliegt. Ein Granulat oder ein Elastomerstreifen wird über den Vorlagebehälter 13 und ein Dosiermittel, wie beispielsweise einer Zellradschleuse 14 in den Medienraum zwischen Schneckenkolben 7 und Zylinder 5 eingebracht. Das Granulat oder der Elastomerstreifen wird zur Weiterverarbeitung aufgeschmolzen, aus diesem Grund kann der Zylinder 5 über Heizvorrichtungen 15 verfügen.

Liegt das zu fördernde Fluid bereits in flüssiger Form vor, kann auf einen Schneckenkolben verzichtet werden. Ein einfacher Förderkolben 16, der in einem Förderzylinder 17 oszillierend beweglich gelagert ist, dient der Förderung einer derartigen Komponente. Zur Temperierung und/oder zur Erlangung der Eintrittstemperatur in die Dosiervorrichtung kann der Förderzylinder mit einer Heizvorrichtung 18 ausgestattet sein.

Soll die Anlage zur Herstellung von LSR verwendet werden, handelt es sich bei den Komponenten um Polysiloxan mit einem Vernetzer, bestehend aus kurzen Polymerketten. Das Additiv umfasst insbesondere ein Treibmittel, wie $CO_2$, $N_2$, eine Kohlenwasserstoffverbindung, wie beispielsweise Pentan, oder ein Gemisch der genannten Gase.

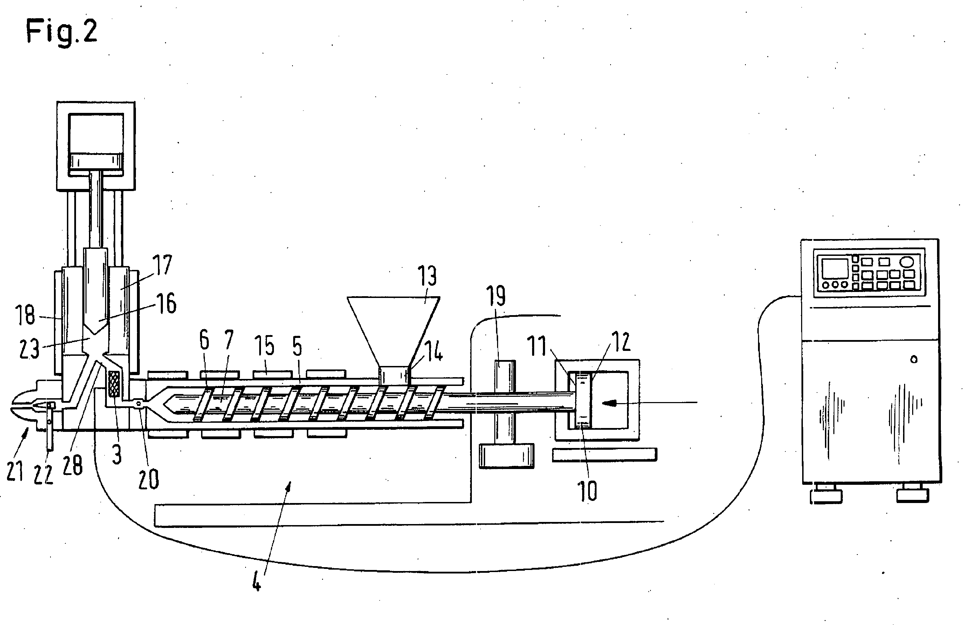

In Fig. 2 ist abweichend von Fig. 1 eine Anlage gezeigt, die eine Extrusion eines zähflüssigen oder viskosen Fluids oder die Verarbeitung eines in Granulatform vorliegenden Rohmaterials zum Gegenstand hat. Das Granulat kann selbst ein Gemisch mehrerer Komponenten darstellen. Häufig handelt es sich bei Granulaten um Polymere, die während der Extrusion nicht nur durch die Fördervorrichtung 4 gefördert werden sollen, sondern auch zumindest teilweise aufgeschmolzen werden sollen. Dazu wird das Granulat von einem Vorlagebehälter über ein Dosiermittel, wie beispielsweise eine Zellradschleuse 14 in einen Zylinder 5 gefördert, in welchem sich ein mit einer Schnecke 6 versehener Schneckenkolben 7 befindet. Der Schneckenkolben kann durch Drehmittel 19 in Rotation versetzt werden und/oder durch oszillierende Antriebsmittel, wie beispielsweise einen druckfluidbeaufschlagbaren Kolben 10, hin- und herbewegt werden. Ein derartiger Kolben weist zumeist eine gegenüber dem Schneckenkolben vergrösserte Querschittsfläche auf.

Um ein als Granulat vorliegendes Rohmaterial in geschmolzenen Zustand umzuwandeln, ist je nach der Lage des Schmelzpunktes des Granulats gegebenenfalls eine Heizvorrichtung 15 vorgesehen. Die durch den Zylinder 5 geförderte Formmasse wird anschliessend über einen optional mit einem Absperrmittel 20 versehenen Kanal in die Dosiervorrichtung 3 gefördert. Das Absperrmittel 20 kann beispielsweise ein Rückschlagventil umfassen. In der Dosiervorrichtung 3 erfolgt die Zugabe eines Additivs, wie beispielsweise eines Treibmittels, wie zu Fig. 1 bereits ausgeführt wurde. Handelt es sich bei dem einzumischenden Additiv um ein Treibmittel, sind Absperrmittel im allgemeinen vorzusehen, um eine Entmischung zu vermeiden. Durch die Verwendung von Absperrmitteln kann der Druck in der Formmasse derart geregelt werden, dass unerwünschte Entmischungen vermieden werden können, insbesondere kann die Formmasse unter einem Druck gehalten werden, bei welchem gewährleistet ist, dass das Treibmittel in gelöster Form in der Formmasse vorliegt.

Absperrmittel 20 können entfallen, wenn in der Anlage eine Vernetzung, eine Einmischung von Farben, Flammschutzmitteln oder dergleichen erfolgen soll. Derartige Zusätze verbleiben nach dem Mischvorgang in gemischtem Zustand, sodass die Funktion der Absperrmittel, einen definierten Druck in der Formmasse aufrecht zu erhalten, entfällt.

Im Gegensatz zu der in Fig. 1 dargestellten Variante wird gemäss der Ausführungsform in Fig. 2 die additivhaltige Schmelze in einem Kompressionsraum und/oder Volumenspeicherraum 23 komprimiert. Durch die Erhöhung des Drucks in der Schmelze wird vermieden, dass es zu Entmischungsvorgängen und/oder zu einer vorzeitigen Schaumbildung durch in der Schmelze enthaltenes Treibmittel kommen kann. Zur Kompression kann der in Fig. 2 dargestellte Förderkolben 16, dem auch die Funktion eines Druckausgleichskolbens zukommen kann, zum Druckaufbau in der Schmelze verwendet werden. Die komprimierte Schmelze wird sodann durch die Düse 21 ausgetragen. Die Dosiervorrichtung 3 ist in Fig. 2 zwischen Absperrmittel 20 und Kompressions/Volumenspeicherraum angeordnet. Somit kann bereits die Dosierung des Additivs, unter höherem Druck als dem Förderdruck der Schmelze im Zylinder 5 erfolgen. Durch die Anordnung eines statischen Mischelements 24 in der Dosiervorrichtung 3 wird gewährleistet, dass einerseits das zugeführte Additiv vollständig und gleichmässig mit der Formmasse vermischt wird, andererseits die Vermischung kontinuierlich und vollständig erfolgt. Nach dem Austritt aus der Dosiervorrichtung liegt eine Schmelze vor, in welcher das Additiv, also insbesondere ein gasförmiges oder leichtflüchtiges Treibmittel, in gelöster Form vorliegt. Entmischungsvorgänge bei schwer mischbaren Komponenten mit sich voneinander stark unterscheidenden physikalischen Eigenschaften können im Kompressionsraum so gut wie ausgeschlossen werden, da das Additiv durch den hohen Druck in gelöstem Zustand in der Schmelze verbleibt. Die Schmelze verlässt den Kompressionsraum 23 über die Düse 21.

Gerade bei Verwendung gasförmiger, flüssiger oder überkritischer Additive, wie z.B. physikalischen Treibmitteln, verstärkt sich die Tendenz zur Entmischung bei sinkendem Druck, da die Diffusionsgeschwindigkeit der Treibmittelbläschen zunimmt. Somit kann die Ausbildung einer geschäumten Formmasse mit einer definierten, homogenen Schaumstruktur nach Austritt der Schmelze aus der Düse durch Einstellung des Drucks und/oder der Temperatur erfolgen. In einem Extrusionsverfahren tritt die Schmelze kontinuierlich aus der Düse aus, sodass ein rohrförmiges, strangartiges oder fadenförmiges Extrusionsprodukt erhalten werden kann.

Die verwendete Anlage eignet sich auch zur Verwendung in einem der früher genannten Extrusionsverfahren. Die in Fig. 2 dargestellte Düse beinhaltet dazu eine konzentrisch im Strömungskanal angeordnete Gasdüse 22, durch welche ein Gas in die komprimierte Polymerschmelze eingetragen werden kann, sodass sich im Inneren der Polymerschmelze ein Hohlraum ausbildet, der sich nach Verlassen der Düse derart vergrössert, dass ein schlauchförmiges Produkt, das heisst ein rohrförmiges Produkt mit einem hohlen Kern, entsteht.

Wird anstatt oder zusätzlich zu der Gasdüse 22 ein Absperrmittel in der Düse 21 vorgesehen, ist die Anlage in gleicher Weise für diskontinuierliche Herstellung von Formteilen in einem Spritzgiessverfahren verwendbar.

Die aus der Dosiervorrichtung 3 austretende Formmasse wird in eine Kavität 25 eines formgebenden Werkzeugs 26 eingespritzt, wobei es zu einer Absenkung des Drucks kommt. Apparativ durchläuft die gemischte Formmasse nach dem Austritt aus der Mischeinrichtung eine Verbindungseinrichtung, mittels welcher eine Dosierung der Formmasse erfolgt. Diese Verbindungseinrichtung kann den in Fig. 2 dargestellten Förderkolben 16 umfassen, der nicht nur als Druckausgleichskolben, sondern auch zum Druckaufbau in der Schmelze stromabwärts des Absperrmittels 20 verwendet werden kann. Durch Verschiebung des Förderkolbens entsteht ein von einem definierten Schmelzevolumen auszufüllender Raum, welcher der Dosierung der Formmasse dient. Daher kann der Kolbenraum als eine für ein Spritzgiessverfahren vorgesehene Dosiervorrichtung zur Dosierung eines für das Formwerkzeug bestimmten Schmelzevolumens dienen. Diese Dosiervorrichtung kann weiters eine Düse, insbesondere eine Drosseldüse umfassen. Durch die Drosseldüse kann der eingespritzte Volumenstrom, sowie die Geschwindigkeit der Einspritzung in eine Kavität des Spritzgiess-Formwerkzeugs gesteuert werden. Die Kavität kann zur Beschleunigung der Venetzungsreaktionen beheizt werden.

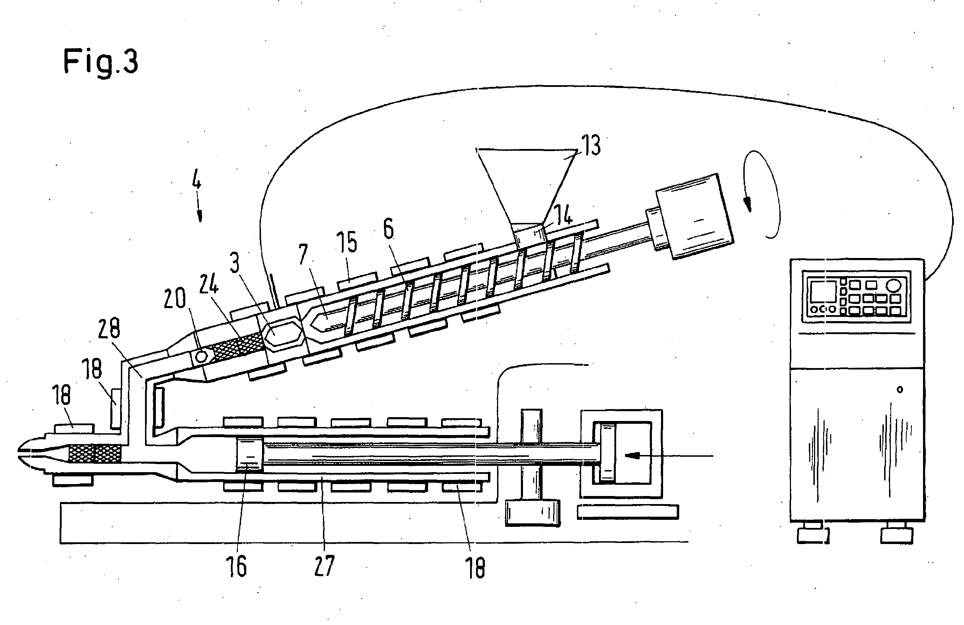

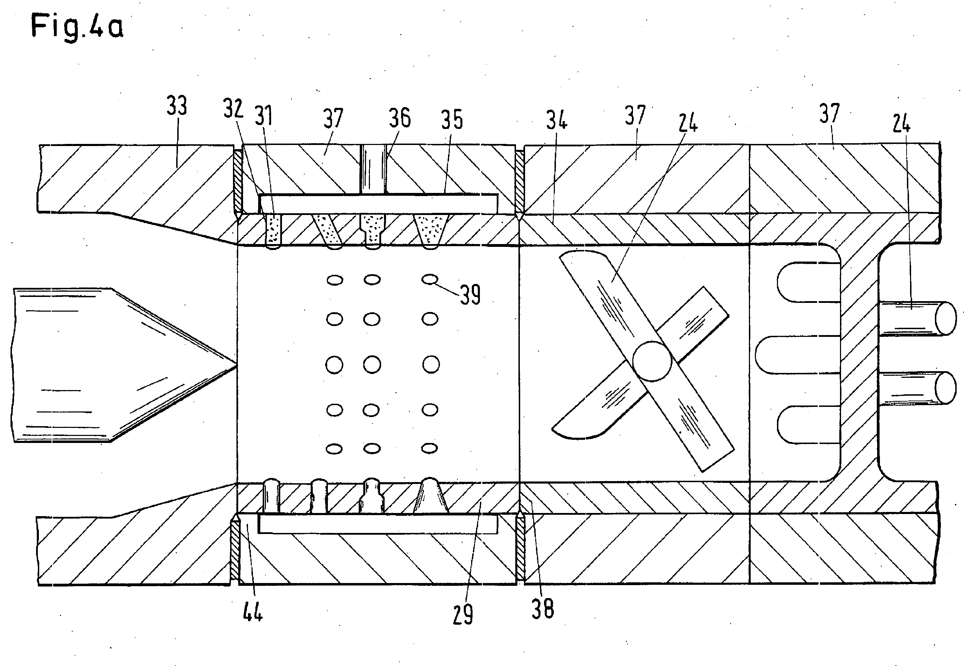

In Fig. 3 wird ein drittes Ausführungsbeispiel für eine Anlage mit einer Dosiervorrichtung für ein Additiv, insbesondere ein Treibmittel in ein flüssiges oder pastöses Medium gezeigt. Bei dem flüssigen Medium kann es sich insbesondere um eine Flüssigkeit mit hoher Viskosität, wie beispielsweise eine Polymerschmelze handeln, wobei die Polymerschmelze insbesondere in einer Anlage zur Erzeugung eines geschäumten Formteils einsetzbar ist. Eine Fördervorrichtung 4 ähnlich der in Fig. 1 dargestellten Fördervorrichtung dient der Verflüssigung eines als Granulat vorliegenden Polymers, wobei die Fördervorrichtung insbesondere als Extruder ausgebildet sein kann. Abweichend von Fig. 1 ist die Fördervorrichtung 4 zumeist nicht für eine Oszillationsbewegung ausgelegt, sondern führt eine Rotationsbewegung um die gemeinsame Achse von Zylinder und Schneckenkolben aus. Eine oszillierende Bewegung von Schnecke und/oder Schneckenkolben ist vorteilhaft, wenn eine Formmasse in eine Spritzgiessmaschine einzudosieren ist. Das verflüssigte Polymer tritt nach dem Aufschmelzen im Zylinder in eine Dosiervorrichtung 3 ein, in welcher ein Additiv zu der flüssigen oder pastösen Masse vorliegenden Schmelze beigemischt wird. Im Anschluss an die Dosiervorrichtung 3 ist zumindest ein statisches Mischelement 24 der mit dem Additiv beladenen Formmasse angeordnet, wodurch eine homogene Verteilung des Additivs im Schmelzestrom realisierbar ist. Durch das statische Mischelement werden bei geeigneter Ausführung insbesondere gemäss einer der Fig. 4a bis Fig. 7 minimale Scherkräfte in die Schmelze eingeleitet. Die aus dem Mischelement austretende Formmasse wird zur Druckerhöhung und/oder Dosierung in einen Kompressionsraum und/oder Volumenspeicherraum 23 eingeleitet, dessen Volumen durch einen hin- und her beweglichen Förderkolben 16 in einem ähnlich dem in der Fig. 2 dargestellten Förderzylinder 17 aufgebauten Einspritzzylinder 27 veränderbar ist. Zur Temperierung der Formmasse kann der Einspritzzylinder 27 zumindest über einen Teil des eingeschlossenen Volumens mit Heizvorrichtungen 18 ausgestaltet sein. Der in Fig. 3 gezeigte Verbindungskanal 28 zur Förderung der Formmasse vom Absperrmittel 20 bis in den Kompressionsspeicheraum und/oder Volumenspeicherraum kann ebenfalls mit einer Heizvorrichtung 18 versehen sein, wenn über die Kanallänge ein signifikanter Temperaturabfall der Formmasse feststellbar ist. Die gesamte Fördervorrichtung 4 kann auch nach Inbetriebnahme einer Spritzgiessmaschine oder eines Extruders nachgerüstet werden. Auch die Dosiervorrichtung 3 sowie jedes Mischelement 24 können in gleicher Weise nachgerüstet werden, da der Zylinder 5 mit der zugehörigen Schnecke 6, die Dosiervorrichtung 3 und jedes Mischelement ein eigenständiges Modul darstellt. Zudem können Fördervorrichtung 4 und Dosiervorrichtung 3 für eine weitere zu dosierende Komponente auch nachträglich an einen Verbindungskanal 28 angebracht werden, der als sogenanntes Schlafrohr ausgebildet ist. Als Schlafrohr wird im allgemeinen ein Verbindungskanal oder Verbindungsrohr bezeichnet, welches keine verfahrenstechnische Aufgabe im laufenden Prozess erfüllt. Alternativ dazu ist es möglich, das Konzept der Modularität auch auf den Verbindungskanal 28 auszudehnen, sodass der Verbindungskanal 28 in einfacher Weise durch einen Verbindungskanal mit zumindest einem zusätzlichen Anschlussstutzen austauschbar ist. An einem derartigen Anschlussstutzen können dann beliebige Kombinationen der oben genannten Module angedockt werden.

In Fig. 4a ist ein Längsschnitt eines ersten Ausführungsbeispiels einer Dosiervorrichtung von Additiven zu zähflüssigen oder viskosen Fluiden oder pastösen Massen gezeigt. Die Dosiervorrichtung 3 umfasst einen ersten, die fluide oder fliessfähige pastöse Masse aufnehmenden, Kanalabschnitt 29, wobei das Fluid den Kanalabschnitt 29 durchströmt. Der fluidaufnehmende Kanalabschnitt 29 kann ein insbesondere als Rohr ausgestalteter Kanalabschnitt sein. Der durchströmte oder fluidaufnehmende Kanalabschnitt 29 enthält zumindest ein Dosierelement 31. Der fluidaufnehmende Kanalabschnitt besteht aus einem Werkstoff mit guten Festigkeitseigenschaften. Mehrere derartige Kanalabschnitte können hintereinander geschaltet sein, wenn verschiedene Additive zugemischt werden sollen. Jeder der genannten Kanalabschnitte 29 kann eine Ausnehmung 32 zur Aufnahme des Dosierelements 31 enthalten, wobei die Ausnehmung allseitig von dem Werkstoff des Kanalabschnitts 29 begrenzt ist und das Dosierelement in der Ausnehmung gehalten wird. In der Dosiervorrichtung 3 erfolgt die Imprägnierung zumindest einer der Komponenten der fluiden oder fliessfähigen pastösen Masse mit einem Additiv, beispielsweise einem Treibmittel, insbesondere einem physikalischen Treibmittel. Das Additiv wird unter Druck in die Dosiervorrichtung über zumindest einen Kanal 36 zur Additivzufuhr eingespeist. Die Dosiervorrichtung 3 umfasst einen Strömungskanal 35, der insbesondere als Ringkanal ausgebildet sein kann und der Verteilung des über Kanal 36 zugeführten Additivs auf den Kanalabschnitt 29 dient. Der Strömungskanal 35 ist als Ausnehmung an der Innenwand des Gehäuseabschnitts 37 ausgestaltet oder als Ausnehmung auf der Aussenwand des Kanalabschnitts 29 angebracht, wobei der Gehäuseabschnitt den Kanalabschnitt 29 vollumfänglich umschliesst. Der Gehäuseabschnitt 37 ist mit Vorsprüngen 44 ausgestattet, die sich auf dem Kanalabschnitt 29 fluiddichtend abstützen. Nicht dargestellt sind in den Vorsprüngen 44 gegebenenfalls erforderliche Dichtungselemente, wobei alternativ auch eine Fügverbindung insbesondere durch eine dichtende Schweissverbindung oder Lötverbindung vorsehbar ist. Das durch den Kanal 36 in den Ringkanal 35 eingespeiste Additiv tritt anschliessend über die Dosierelemente 31 in den von der fluiden oder pastösen Masse durchströmten Strömungskanal ein, der von dem Kanalabschnitt 29 umschlossen ist. Das Additiv tritt dann durch eine poröse Oberfläche, die bei niedrigen Drücken auch als poröse Hülse, insbesondere als poröser Zylinder gemäss EP06405123.8 ausgestaltet sein kann, bei höheren Drücken, die insbesondere bei einem Verfahren zur Verarbeitung von LSR bei maximal 300 bar, bevorzugt bei maximal 200 bar liegen, als der vorhin beschriebene Kanalabschnitt 29 mit Dosierelementen ausgeführt sein kann, in Kontakt mit der fluiden oder pastösen Masse, welche im Inneren des Kanalabschnitts 29 strömt. Auf mögliche konstruktive Ausgestaltungen der Dosiervorrichtung soll in der Folge noch im Detail eingegangen werden. Zur besseren und schnelleren Durchmischung und Homogenisierung des Gemisches aus fluider, viskoser oder pastöser Masse und Additiv kann der Kanalabschnitt 29 oder ein benachbarter Kanalabschnitt (33, 34) ein statisches Mischelement 24 enthalten. Das Mischelement kann sich, wie in Fig. 4a dargestellt ist, in zumindest einem stromabwärts zu dem Kanalabschnitt 29 gelegenen Kanalabschnitt 34 befinden. Mehrere Kanalabschnitte 29 können mit entsprechenden Gehäuseabschnitten 37 in beliebiger Folge, die an die jeweilige Mischungsaufgabe angepasst ist, beliebig aneinandergereiht werden, da auch sie modular aufgebaut sind. In Fig. 4a ist dargestellt, dass anschliessend an den Imprägnierungsschritt, das heisst, der Zufuhr des Additivs zur strömenden fluiden oder pastösen Masse, der in der eben beschriebenen Dosiervorrichtung durchgeführt wurde, die so entstandene Formmasse in einen stromabwärts gelegenen Kanalabschnitt 34 gefördert wird, der das statische Mischelement 24 enthält. Im statischen Mischelement kann der Formmassenstrom geteilt, wieder zusammengeführt und durch Hintereinanderschaltung zumindest eines weiteren Mischelements, welches gegenüber dem vorhergehenden Mischelement um einen Winkel gedreht ist, umgelagert werden. Durch mehrere, hintereinander im Formmassenstrom angeordnete Mischelemente 24, die jeweils zueinander winkelversetzt angeordnet sind, erfolgt eine Homogenisierung des Additivs in der Formmasse, sodass nach Austritt aus der Mischstrecke eine gleichmässig mit Additiv beladene Formmasse vorliegt. Eine besonders gute Homogenisierung ist mit zueinander in einem Winkel von 90° versetzten Mischelementen erzielt worden. Das statische Mischelement 24 kann als Teil eines Kanalabschnitts (29,33,34) ausgebildet sein, insbesondere sind das Mischelement sowie der Kanalabschnitt als ein Gussteil ausgebildet, geschweisst, gelötet oder formschlüssig verbunden.

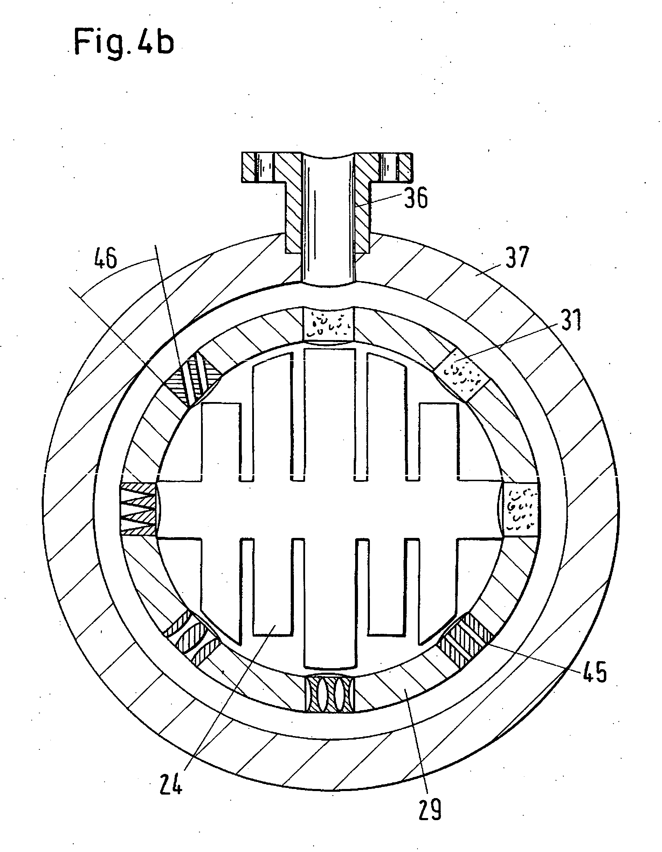

Fig. 4b ist ein Schnitt durch die Anordnung von Fig. 4a entlang einer normal zur Hauptströmungsrichtung gelegenen Ebene. In Fig. 4b sind insbesondere Dosierelemente 31 mit kapillarartigen Öffnungen 45 gezeigt. Derartige kapillarartige Öffnungen reichen vom Ringkanal 36 bis zum Strömungskanal, in welchem sich die zu beladende fluide oder pastöse Masse befindet. In Fig. 4b sind verschiedene mögliche Ausgestaltungen der kapillarartigen Öffnungen gezeigt, nämlich mit über die Kanallänge der Öffnung im wesentlichen gleichbleibenden Querschnitt, mit sich verengenden und/oder erweiternden Querschnitten, wobei insbesondere düsenförmige Querschnitte zum Eintrag mit erhöhter Strömungsgeschwindigkeit führen. Querschnitte, die mit zentraler oder randseitiger Erweiterung ausgebildet sind, können den Eintrag des Additivs in Tröpfchenform begünstigen. Die Ausführung der Öffnungen soll nicht auf die beispielhaft gezeigten Ausführungsformen beschränkt sein. Insbesondere können Kapillaröffnungen vorgesehen sein, deren Achse nicht normal zur Hauptströmungsrichtung steht, sondern in einem Winkel 46 geneigt ist. Durch eine Neigung in der in Fig. 4b dargestellten Schnittebene kann ein tangentialer Eintrag des Additivs erfolgen, alternativ dazu oder zusätzlich kann eine Neigung der Achse der Öffnung 45 oder des gesamten Dosierelements 31 relativ zur Hauptströmungsrichtung vorgesehen sein, wie in Fig. 4a gezeigt wurde. Insbesondere können für diese Kapillaren Kristalle mit Nanokapillaren zum Einsatz kommen.

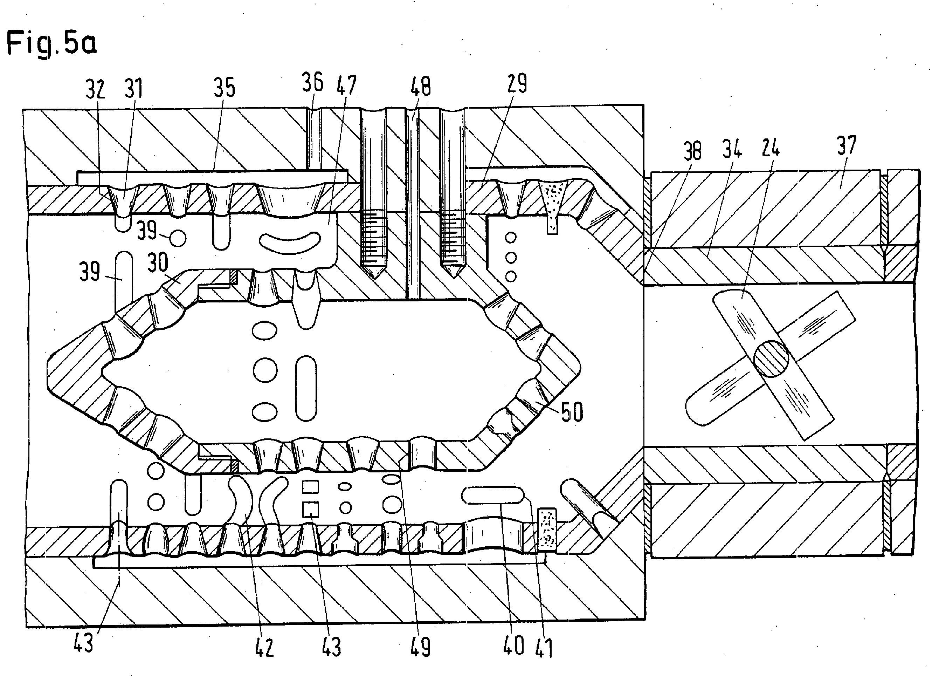

Fig. 5a zeigt ein Ausführungsbeispiel einer Dosiervorrichtung mit einem Strömungskanal für eine fluide, viskose oder pastöse Masse der als Ringspalt 47 ausgebildet ist. Der Ringspalt 47 wird durch einen fluidumströmten Kanalabschnitt 30 gebildet, der in dem fluidaufnehmenden Kanalabschnitt 29 eingebaut ist. Die Dosiervorrichtung 3 umfasst einen ersten, die fluide, viskose oder fliessfähige pastöse Masse aufnehmenden, Kanalabschnitt 29, wobei das Fluid den Kanalabschnitt 29 durchströmt und einen weiteren Kanalabschnitt 30, der von der fluiden oder fliessfähigen, viskosen pastösen Masse umströmbar ist. Der fluidaufnehmende Kanalabschnitt 29 kann ein insbesondere als Zylinderrohr ausgestalteter Kanalabschnitt sein. Der fluidumströmte Kanalabschnitt 30 kann insbesondere einen dem fluidaufnehmenden Kanalabschnitt 29 entsprechenden Querschnittsverlauf aufweisen, sodass die Strömungsgeschwindigkeit im Ringspalt im wesentlichen konstant ist. Der durchströmte und /oder der umströmte Kanalabschnitt (29,30) enthalten zumindest ein Dosierelement 31. Der fluidaufnehmende, sowie der fluidumströmte Kanalabschnitt bestehen aus einem druckbeständigen Werkstoff. Jeder der genannten Kanalabschnitte (29,30) kann eine Ausnehmung 32 zur Aufnahme des Dosierelements enthalten, wobei die Ausnehmung allseitig von dem Werkstoff des Kanalabschnitts (29,30) begrenzt ist und das Dosierelement in der Ausnehmung gehalten wird. In der Dosiervorrichtung 3 erfolgt die Imprägnierung zumindest einer der Komponenten der fluiden oder fliessfähigen pastösen Masse mit einem Additiv, insbesondere einem physikalischen Treibmittel. Das Additiv wird unter Druck in die Dosiervorrichtung 3 über zumindest einen Kanal 36 zur Additivzufuhr eingespeist. Die Dosiervorrichtung 3 umfasst einen Strömungskanal 35, der insbesondere als Ringkanal ausgebildet sein kann und der Verteilung des über Kanal 36 zugeführten Additivs auf den Kanalabschnitt 29 dient. Der Strömungskanal 35 ist wie in Fig. 4a als Ausnehmung an der Innenwand des Gehäuseabschnitts 37 ausgestaltet, wobei der Gehäuseabschnitt den Kanalabschnitt 29 vollumfänglich umschliesst. Ein weiterer Kanal 48 ist vorgesehen, um Additiv in das Innere des Kanalabschnitts 30 zu fördern. Das durch den Kanal 36, in den Ringkanal 35 sowie über Kanal 48 in einen Hohlraum 49 des Kanalabschnitts 30 eingespeiste Additiv tritt anschliessend über die Dosierelemente 31 in den von der fluiden oder pastösen Masse durchströmten Strömungskanal, der von dem Kanalabschnitt 29 umschlossen ist. In Fig. 5a sind beispielhaft verschiedene Möglichkeiten zur Gestaltung der Dosierelemente und der Ausnehmungen aufgezeigt. Die Auswahl des Dosierelements in der geeigneten Form kann je nach verwendetem Additiv variieren. Die Verwendung von Formen mit im wesentlichen kreisförmigen Eintrittsquerschnitt 39 kommen für insbesondere für gasförmige oder leichtflüchtige Additive zum Einsatz, die gleichmässig über die gesamte Oberfläche des Kanalabschnitts in die fluide oder pastöse Masse eingebracht werden sollen. Mit ihren relativ zur Oberfläche des Kanalabschnitts kleinen Abmessungen wird der Grundwerkstoff des Kanalabschnitts nicht wesentlich verschwächt, sodass sich diese Ausführungsform insbesondere bei Hochdruckverfahren mit Drücken bis zu 1000 bar eignet. Von Wichtigkeit ist dabei, dass im Gegensatz zu einer Siebstruktur, wie sie in einem vollständig aus porösem Material ausgebildeten Kanalabschnitt, d.h. einer porösen Hülse auftritt, die Dosierelemente einen zumindest gleich grossen Abstand voneinander haben, wie ihr Maximaldurchmesser beträgt. Vorteilhafterweise beträgt der Abstand zweier benachbarter Dosierelemente das 1 bis 1,8-fache ihres Durchmessers, insbesondere das 1 bis 1,6-fache des Durchmessers, besonders bevorzugt das 1 bis 1,5-fache des Durchmessers.

Nach einer weiteren Ausführungsform weist das Dosierelement einen Eintrittsquerschnitt 39, der eine Längsseite 40 und eine Breitseite 41 auf, wobei das Verhältnis der Längen der Längsseite 40 zu der Breitseite 41 zumindest 1,25 beträgt. Die Verwendung derartiger Dosierelemente eignet sich insbesondere für Anwendungen, in denen das Additiv mit einer minimalen Anzahl von Dosierelementen 31 in die fluide, viskose oder pastöse Masse eingebracht werden soll. Für den Eintrag desselben Volumenstroms and Additiven werden somit weniger Dosierelemente 31 benötigt. Diese Variante ist kostengünstiger, weil einfacher herzustellen und eignet sich insbesondere für Anwendungen bei geringen Drücken bis zu mittleren Drücken.

Nach einer weiteren Variante weist das Dosierelement einen Eintrittsquerschnitt 39 auf, der abschnittweise konvexe und/oder konkave Randkurven 42 und/oder abschnittweise gerade Längsseiten 40 umfasst. Mit einem derartigen Dosierelement kann eine grössere Oberfläche als bei der erstgenannten Variante vom Dosierelement abgedeckt werden. Die Verwendung von bananenförmigen Dosierelementen wird zudem eine bessere Haltbarkeit der Dosierelemente bei mittleren bis höheren Drücken (ca. 30 bis 50 bar) beobachtet, als bei Dosierelementen nach der vorhergehenden Variante, wenn als Bezugsgrösse die von den Dosierelementen abgedeckte Oberfläche verwendet wird.

Das Dosierelement 31 weist vorteilhafterweise eine porenförmige oder kapillarartige Struktur auf. Ein derartiges Dosierelement 31 kann entweder kraftschlüssig mittels einer Presspassung in der Ausnehmung 32 gehalten werden oder formschlüssig durch die geometrische Ausgestaltung der Ausnehmung 32, in die das Dosierelement mit der entsprechenden geometrischen Gegenform eingepasst wird und/oder stoffschlüssig (das heisst insbesondere durch eine Schweiss- oder Lötverbindung) mit dem Kanalabschnitt (29,30) verbunden sein. Der Querschnitt ist in einem Schnitt parallel zur Hauptachse des Dosierelements 31 zylinderförmig, konisch, abschnittsweise zylinderförmig und/oder konisch mit sich abschnittsweise unterscheidenden Durchmessern ausgebildet.

Ein wesentlicher Gesichtspunkt ist die Notwendigkeit, die Dosierelemente nicht in der Nähe der Verbindungen 38 anzuordnen, die benachbarte Kanalausschnitte miteinander unlöslich verbinden. Jede Anordnung im Bereich der Verbindungen hat eine Verschwächung der Verbindung zur Folge. Handelt es sich um Schweissnähte, besteht einerseits das Problem, dass die Dosierelemente aus einem anderen Werkstoff bestehen können, als der Kanalabschnitt (29,33,34), sodass eine Schweissverbindung schon aufgrund der Werkstoffpaarung schwierig herstellbar ist. Zudem sind poröse oder mit Kapillarkanälen versehene Dosierelemente an und für sich als Bauelemente anzusehen, die aufgrund der inherenten Verschwächungen über verminderte Festigkeit verfügen. Wenn ein derartiges Dosierelement durch ein Schweissverfahren zusätzliche Spannungen aufnehmen muss, können sich bereits zu diesem Zeitpunkt Mikrorisse im Dosierelement ausbilden. Im Betrieb kommen zusätzliche Spannungen durch den Druck der Formmasse hinzu. Wird zudem ein Schneckenkolben, insbesondere ein oszillierender Schneckenkolben, zur Förderung der fluiden oder pastösen Masse eingesetzt, kommt es zusätzlich zu periodischen Spannungsschwankungen, die in die Schweissnähte eingeleitet werden.

Diese Dauerwechselbelastung führt zur Rissausbreitung und zum Versagen des Kanalabschnitts, insbesondere wenn Formmassen unter hohen Drücken zu verarbeiten sind. Aus diesem Grund sollte der Anteil der Oberfläche des Kanalabschnitts, der von Dosierelementen eingenommen wird, bei einem maximalen Betriebsdruck von 1000 bar 20% nicht überschreiten.

Insbesondere wurden bisher die folgenden Konfigurationen konstruktiv realisiert und bei einem maximalen Betriebsbdruck von 1000 bar getestet:

| | 1 | 2 | 3 | 4 |
|---|---|---|---|---|
| Stiftoberfläche (mm$^2$) | 613,3 | 1070,9 | 1698 | 2221,9 |

(fortgesetzt)

| | 1 | 2 | 3 | 4 |
|---|---|---|---|---|
| Hülsenoberfläche (mm$^2$) | 4021,2 | 5805,6 | 8625,6 | 12271 |
| Stiftdurchmesser (mm) | 5,2 | 7,5 | 8,8 | 10,8 |
| Abs. Stiftabstand min. (mm) | 7,26 | 7,51 | 10 | 12,12 |
| Abs. Stiftabstand max. (mm) | 9,41 | 10,25 | 13,38 | 16,06 |
| Anteil Stiftoberfläche an Hülsenoberfläche (%) | 15,25 | 18,43 | 19,68 | 18,1 |
| Verhältnis von abs. Stiftabstand zu Stiftdurchmesser | 1,4-1,8 | 1,0-1,37 | 1,14-1,52 | 1,12-1,49 |

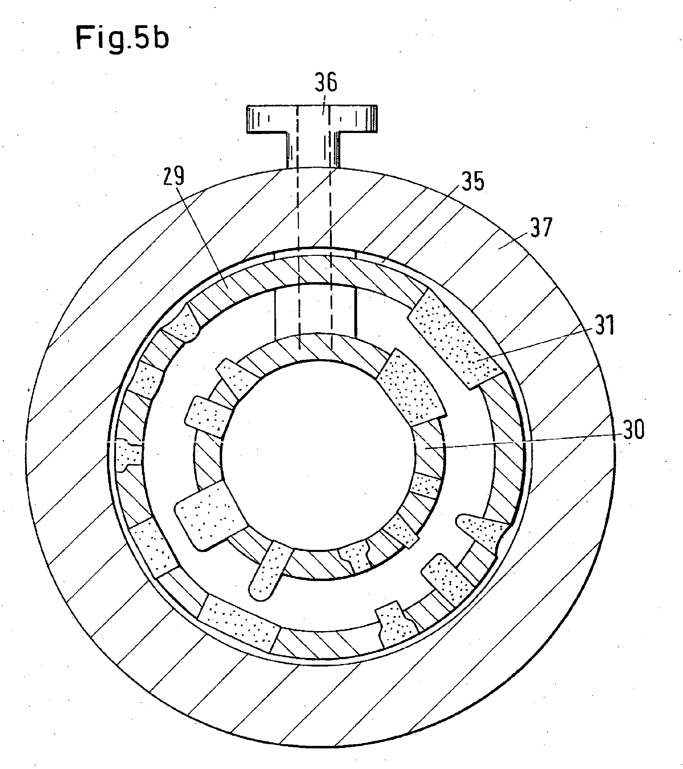

Fig. 5b ist ein Schnitt durch die Anordnung von Fig. 5a entlang einer normal zur Hauptströmungsrichtung gelegenen Ebene. In Fig. 5b sind insbesondere Dosierelemente 31 gezeigt, die in das Innere des die fluide oder pastöse Masse enthaltenden Strömungskanals ragen. Mittels derartiger Dosierelemente wird bereits ein Eintrag von Additiv in einen breiteren Randbereich erreicht, sodass eine Formmasse mit einer hohen Additivkonzentration in einem breiteren Randbereich erhalten wird. Zusätzlich können die Dosierelemente im Strömungskanal versetzt hintereinander angeordnet werden, oder Dosierelemente in zumindest zwei verschiedenen Ausführungen hintereinander angeordnet werden, wie beispielsweise in Fig. 4a, Fig. 4b, Fig. 5a, Fig. 5b, Fig. 6, Fig. 7 dargestellt. Nicht dargestellt ist in Fig. 5b, ein Mischelement im Strömungskanal zwischen dem Kanalabschnitt 29 und dem Kanalabschnitt 30 anzuordnen. Ein derartiges Mischelement kann beispielsweise ähnlich der in der EP1153650 A1 ausgeführten Mischelemente ausgestaltet sein.

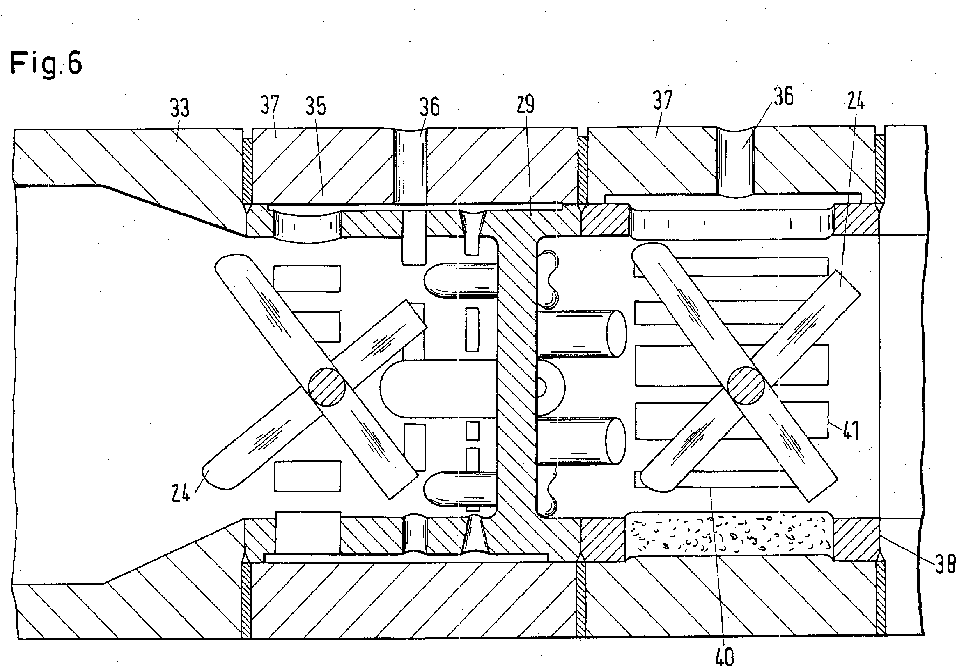

Fig. 6 zeigt einen Längsschnitt durch ein weiteres Ausführungsbeispiel für eine Dosiervorrichtung mit Dosierelementen mit länglicher Struktur und Mischelementen, die in der Dosiervorrichtung angeordnet sind. Auf die Funktion von Bauelementen, die bereits in den vorhergehenden Abbildungen beschrieben worden sind, soll an dieser Stelle nicht mehr im Detail eingegangen werden. Mit Hilfe des in Fig. 6 dargestellten Ausführungsbeispiels ist es möglich, die Mischstrecke zu verkürzen. Zudem können auch Dosierelemente vorgesehen werden, die in den Innenraum des Strömungskanals ragen, sodass eine zusätzliche Vermischung von Additiv und fluider oder pastöser Masse insbesondere in den Strömungsrandbereichen erfolgen kann.

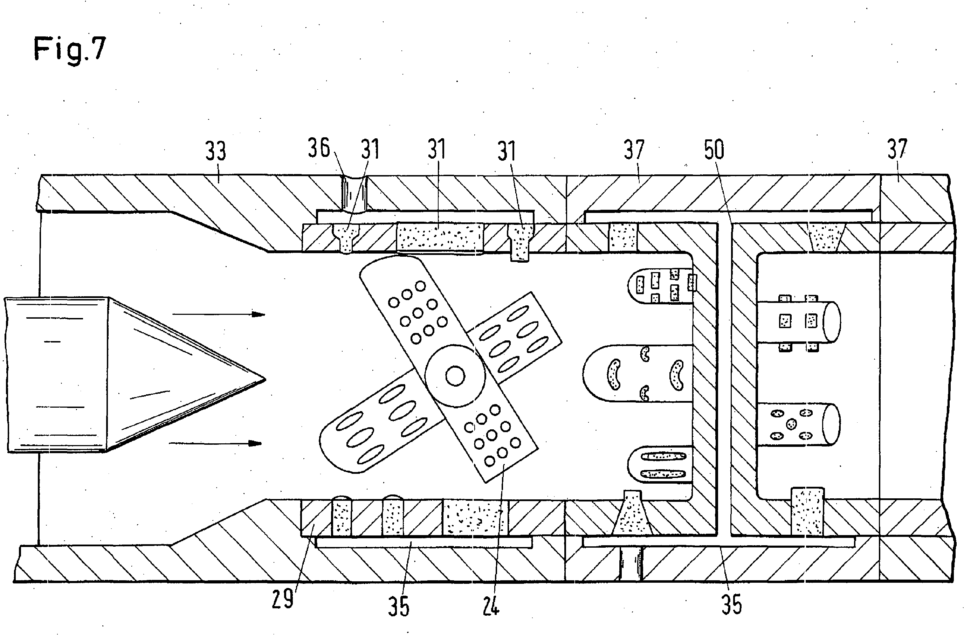

Fig. 7 zeigt ein Dosierelement, das in ein Mischelement integriert ist. Die in Fig. 4a, Fig. 4b, Fig. 5a, Fig. 6 dargestellten Mischelemente 24 werden mit einem Verteilerkanal 50 versehen, der sich als Bohrung im Inneren des Mischelements befindet. Die Lösung gemäss Fig. 7 ist geeignet, um ein Additiv gleichmässig mit sofortiger Mischwirkung insbesondere in einen Strömungskanal grossen Durchmessers einzutragen.

Eine weitere, hier nicht im Detail dargestellte Möglichkeit kann bei Strömungskanälen grossen Durchmessers zum Einsatz kommen. Die Strömung wird auf in mehrere parallel zueinander verlaufende Teilkanäle aufgespalten, worauf beispielsweise in der noch unveröffentlichten EP06405129.5 bereits eingegangen wurde, die hiermit in ihrer Gesamtheit als integrierender Bestandteil dieser Anmeldung aufgenommen wird.

Bezugszeichenliste

1.    Reservoir
2.    Pumpe
3.    Dosiervorrichtung
4.    Fördervorrichtung
5.    Zylinder
6.    Schnecke
7.    Schneckenkolben
8.    Pfeil
9.    Eintrittsstutzen
10.   vergrösserter Querschnitt
11.   Stirnfläche
12.   Stirnfläche
13.   Vorlagebehälter
14.   Zellradschleuse
15.   Heizvorrichtung

16. Förderkolben
17. Förderzylinder
18. Heizvorrichtung
19. Drehmittel
20. Absperrmittel
21. Düse
22. Gasdüse
23. Kompressions- oder Volumenspeicherraum
24. Mischelement
25. Kavität
26. Formgebendes Werkzeug
27. Einspritzzylinder
28. Verbindungskanal
29. Kanalabschnitt (fluidaufnehmend)
30. Kanalabschnitt (fluidumströmt)
31. Dosierelement
32. Ausnehmung
33. stromaufwärts angeordneter Kanalabschnitt
34. stromabwärts angeordneter Kanalabschnitt
35. Ringkanal
36. Kanal für Additivzufuhr
37. Gehäuseabschnitt
38. Verbindung
39. Eintrittsquerschnitt
40. Längsseite
41. Breitseite
42. Randkurve
43. Hauptachse des Dosierelements
44. Vorsprung
45. kapillarartige Öffnung
46. Winkel
47. Ringspalt
48. Kanal
49. Hohlraum
50. Verteilerkanal

## Patentansprüche

1. Verfahren zur Herstellung einer Formmasse aus einer Rohmaterialschmelze, die mit einem Additiv beladen wird, umfassend die Schritte:

Beladen einer Fördervorrichtung (4) mit einem Rohmaterial, welches eine flüssige, viskose oder zähflüssige pastöse Masse oder ein Granulat oder Elastomerstreifen umfasst, wobei die Fördervorrichtung einen Zylinder (5) umfasst,
in dessen Innenraum ein Fördermittel, insbesondere eine Schnecke (6) angeordnet ist,
Plastifizierung und/oder Umwandeln des Rohmaterials in eine Rohmaterialsohmelze,
Beladen der Rohmaterialschmelze mit einem Additiv,
Vermischen der Rohmaterialschmelze mit dem Additiv zur Erzeugung einer Formmasse, wobei die Formmasse als homogenes Gemisch der Rohmaterialschmelze mit dem Additiv vorliegt,
Austrag der Formmasse aus der Fördervorrichtung,
wobei das Beladen der Rohmaterialschmelze mit dem Additiv in einer Dosiervorrichtung (3) erfolgt, die in einem Kanalabschnitt (29,30) der Fördervorrichtung (4) und/oder im Anschluss an die Fördervorrichtung (4) angeordnet ist, wobei der Kanalabschnitt von der Rohmaterialschmelze durchströmt und/oder umströmt wird (29,30) und die Dösiervorrichtung eine Vielzahl von Dosierelementen (31) umfasst, welche in einer Ausnehmung (32) des Kanalabschnitts (29, 30) angeordnet sind, und wobei das Additiv über einen Kanal (36) in einen Ringkanal (35) eingetragen wird, der in Verbindung mit den Dosierelementen (31) steht, sodass das Additiv vom Ringkanal (35) durch die Dosierelemente (31) in den mit Rohmaterialschmelze gefüllten Kanalabschnitt (29) und/oder den von Rohmaterial umströmten Kanalabschitt (30) eintreten kann, **dadurch gekennzeichnet, dass** jedes Dosierelement aus einem porösen Material aufgebaut ist und von benachbarten Dosierelementen vollständig getrennt ist und jedes Dosierelement von dem Grundwerkstoff des Kanalabschnitts vollständig umgeben ist und der Eintrag des Additivs über die am Umfang des Kanalabschnitts verteilten, diskreten Dosierelemente erfolgt.

2. Verfahren nach Anspruch 1, wobei in dem Kanalabschnitt (29,30), der die Dosiervorrichtung (3) ausbildet und/oder in zumindest einem anschliessenden Kanalabschnitt (34) die Vermischung des Additivs mit der Rohmaterialschmelze durch zumindest ein Mischelement (24) erfolgt.

3. Verfahren nach einem der vorhergehenden Ansprüche, wobei die Plastifizierung und/oder das Umwandeln des Rohmaterials in eine Rohmaterialschmelze durch Wärmezufuhr zum Rohmaterial erfolgt, insbesondere über eine Heizvorrichtung, welche insbesondere an der Aussenwand des Zylinders (5) angeordnet ist und/oder durch Eintrag von Wärmeenergie durch die Fördervorrichtung, die als Extruder ausgebildet ist.

4. Verfahren nach einem der vorhergehenden Ansprüche, wobei die Formmase einer Spritzgiessmaschine zugeführt wird.

5. Verfahren nach einem der vorhergehenden Ansprüche, wobei die Formmasse in einem kontinuierlichen Verfahren weiterverarbeitet wird, insbesondere einem Extrusionsverfahren, besonders bevorzugt einem Blasextrusionsverfahren, einem Extrusionsblasformverfahren, einem Blasfolienextrusionsverfahren, einem Profilextrusionsverfahren, einem Folienextrusionsverfahren, einem Rohrextrusionsverfahren, einem Plattenextrusionsverfahren oder einem Schaumextrusionsverfahren oder einem Verfahren zur Herstellung von Flüssigsilikonkautschuk (LSR).

6. Verfahren nach einem der vorhergehenden Ansprüche, wobei die Formmasse in einem Kombinationsverfahren von Spritzgiessverfahren und Extrusionsverfahren insbesondere in einer Shot-Pot Maschine zu einem Formteil verarbeitet wird.

7. Verfahren nach einem der vorhergehenden Ansprüche, wobei die Formmasse in einer Einspritzeinheit kontinuierlich zu einem Strang verarbeitet wird oder batchweise in eine Kavität eines formgebenden Werkzeugs eingespritzt wird, um Formteile herzustellen.

8. Verfahren nach Anspruch 8, wobei die Einspritzeinheit einen Kompressions- und/oder Volumenspeicherraum umfasst, in welchem ein Förderkolben derart bewegt wird, dass die Grösse des Kompressions- und/oder Volumenspeicherraums periodisch verändert wird.

9. Verfahren nach einem der vorhergehenden Ansprüche, wobei im Anschluss an die Dosiervorrichtung (3) zumindest eine Verbindung (28) vorgesehen wird, in welcher eine Dosierung der Formmasse erfolgt.

10. Verfahren nach einem der vorhergehenden Ansprüche, wobei die Verbindung (28) in Fluidkontakt mit einem in einem Förderzylinder (17) hin- und herbeweglichen Förderkolben (16) ist, sodass in der Formmasse ein Druck aufgebaut werden kann.

11. Verfahren nach Anspruch 10, wobei die Geschwindigkeit der Einspritzung der Formmasse in die Kavität eines formgebenden Werkzeugs und/oder der einzuspritzende Volumensstrom der Formmasse mittels einer Düse (21), die insbesondere als Drosseldüse ausgebildet ist, gesteuert wird.

12. Verfahren zur Herstellung eines geschäumten Formteils nach einem der vorhergehenden Ansprüche, umfassend die Schritte: Aufschmelzen eines Polymergranulats in einem Extruder zu einer Rohmaterialschmelze, Fördern der Rohmaterialschmelze in die Dosiervorrichtung (3), Zuführen eines Additivs, insbesondere eines Treibmittels zur Rohmaterialschmelze in der Dosiervorrichtung (3), Vermischen des Additivs mit der Rohmaterialschmelze, wobei während des Vermischens der Druck kontinuierlich erhöht wird, indem die Schmelze kontinuierlich gegen eine geschlossene Düse (21), insbesondere eine Nadelverschlussdüse, gefördert wird, die eine Eintrittsöffnung in eine Kavität (25) eines formgebenden Werkzeugs (26) verschliesst, wobei die Düse bei Erreichen des Einspritzdrucks öffnet oder geöffnet wird, um den Weg für die Formmasse in die Kavität (25) freizugeben, bis die Formmasse die Kavität ausfüllt und der Druck der Formmasse soweit absinkt, sodass das in der Formmasse gelöste Treibmittel expandiert und ein geschäumtes Formteil entsteht.

**13.** Verfahren nach Anspruch 12, wobei das Additiv ein physikalisches Treibmittel umfasst, welches insbesondere in gasförmigem, flüssigen oder überkritischen Zustand in die Dosiervorrichtung (3) eintritt.

**14.** Verfahren nach Anspruch 13, wobei das Additiv in einen die Dosiervorrichtung umgebenden Ringkanal (35) unter Druck eintritt und durch die Dosierelemente (31), die insbesondere Kapillaren enthalten oder aus porösem Material aufgebaut sind, mit der vorbeiströmenden Rohmaterialschmelze in Kontakt gebracht wird.

**15.** Verwendung des Verfahrens nach einem der vorhergehenden Ansprüche zur Herstellung von Formteilen und/oder Folien oder Strangmaterial oder Hohlkörpern aus Elastomeren, insbesondere LSR und/oder aus thermoplastischen Kunststoffen und/oder zum Wachsschäumen und/oder zur Verarbeitung von Lebensmitteln, beispielsweise Schokolade.

**Claims**

**1.** A method for the manufacture of a moulding composition from a raw material melt which is charged with an additive including the steps
charging a conveyor apparatus (4) with a raw material which includes a liquid, viscous or gooey pasty composition or a granulate or an elastomer strip, with the conveyor apparatus including a cylinder (5) in whose interior space a conveyor means, in particular a screw (6) is arranged;
plasticising and/or conversion of the raw material into a raw material melt;
charging the raw material melt with an additive;
mixing of the raw material melt with the additive to produce a moulding composition, with the moulding composition being present as a homogeneous mixture of the raw material melt with the additive;
discharge out of the moulding composition from the conveyor apparatus;
wherein the charging of the raw material melt with the additive takes place in a metering device (3) which is arranged in a passage section (29, 30) of the conveyor apparatus (4) and/or subsequent to the conveyor apparatus (4), with the raw material melt (29, 30) flowing through and/or around the passage section and the metering device including a plurality of metering elements (31) which are arranged in a recess (32) of the passage section (29, 30) and wherein the additive is fed into a ring passage (35) via a passage (36), said ring passage being in communication with the metering elements (31) so that the additive from the ring passage (35) can enter through the metering elements (31) into the passage section (29) filled with raw material melt and/or into the passage section (30) through which raw material flows, **characterised in that** each metering element is made from a porous material and is completely surrounded by the base material of the passage section so that it is completely separated from its adjacent elements so that the feed of the additive takes place via discrete metering elements distributed over the periphery of the passage section.

**2.** A method in accordance with claim 1, wherein the mixing of the additive with the raw material melt by at least one mixing element (24) takes place in the passage section (29, 30) which forms the metering device (3) and/or in at least one subsequent passage section (34).

**3.** A method in accordance with any one of the preceding claims, wherein the plasticising and/or the conversion of the raw material into a raw material melt takes place by heat supply to the raw material, in particular via a heating apparatus which is in particular arranged at the outer wall of the cylinder (5) and/or by the feed of thermal energy by the conveyor apparatus, which is configured as an extruder.

**4.** A method in accordance with any one of the preceding claims, wherein the moulding composition is supplied to an injection moulding machine.

**5.** A method in accordance with any one of the preceding claims, wherein the moulding composition is further processed in a continuous process, in particular an extrusion process, particularly preferably a blow extrusion process, an extrusion blow moulding process, a blow film extrusion process, a profile extrusion process, a film extrusion process, a tube extrusion process, a plate extrusion process or a foam extrusion process or a process for the manufacture of liquid silicon rubber (LSR).

**6.** A method in accordance with any one of the preceding claims, wherein the moulding composition is processed to form a moulded part in a combination process of an injection moulding process and an extrusion process, in particular in a shot-pot machine.

7. A method in accordance with any one of the preceding claims, wherein the moulding composition is processed continuously in an injection unit to form a strand or is injected batch-wise into a cavity of a moulding tool to manufacture moulded parts.

8. A method in accordance with claim 8, wherein the injection unit includes a compression space and/or a volume storage space in which a conveying piston is moved such that the size of the compression space and/or of the volume storage space is periodically changed.

9. A method in accordance with any one of the preceding claims, wherein at least one connection (28) in which a metering of the moulding composition takes place is provided subsequent to the metering device (3).

10. A method in accordance with any one of the preceding claims, wherein the connection (28) is in fluid contact with a conveyor piston (16) movable to and fro in a conveyor cylinder (17) so that a pressure can be built up in the moulding composition.

11. A method in accordance with claim 10, wherein the speed of the injection of the moulding composition into the cavity of a moulding tool and/or the volume flow of the moulding composition to be injected is controlled by means of a nozzle (21) which is in particular made as a throttle nozzle.

12. A method for the manufacture of a foamed moulded part in accordance with any one of the preceding claims, including the steps: melting a polymer granulate in an extruder to form a raw material melt; conveying the raw material melt into the metering device (3); supplying an additive, in particular a foaming agent, to the raw material melt in the metering device (3); mixing the additive with the raw material melt, with the pressure being increased continuously during the mixing in that the melt is continuously conveyed towards a closed nozzle (21), in particular a needle-type shut-off nozzle, which closes an inlet opening into a cavity (25) of a moulding tool (26), with the nozzle opening or being opened on the reaching of the injection pressure to make the way free for the moulding composition into the cavity (25) until the moulding composition fills the cavity and the pressure of the moulding composition falls so far that the foaming agent dissolved in the moulding composition expands and a foamed moulded part is created.

13. A method in accordance with claim 12, wherein the additive includes a physical foaming agent which in particular enters into the metering device (3) in a gaseous, liquid or over-critical state.

14. A method in accordance with claim 13, wherein the additive enters into a ring passage (35) surrounding the metering device under pressure and is brought into contact with the raw material melt flowing past through the metering elements (31) which in particular contain capillaries or are made up of porous material.

15. Use of the method in accordance with any one of the preceding claims for the manufacture of moulded parts and/or films or strand material or hollow bodies from elastomers, in particular LSR, and/or from thermoplastics and/or for the wax foaming and/or for the processing of foodstuffs, for example chocolate.

**Revendications**

1. Procédé de fabrication d'une matière à mouler à partir d'une matière première en fusion, dans laquelle est ajouté un additif, comportant les étapes:

   chargement d'un dispositif d'alimentation (4) avec une matière première, qui comporte une matière liquide, visqueuse ou semi-liquide ou un granulat ou des bandes élastomères, le dispositif d'alimentation comportant un cylindre (5),
   à l'intérieur duquel est disposé un moyen d'alimentation, en particulier une vis sans fin (6),
   plastification et/ou transformation de la matière première en une matière première en fusion,
   chargement d'un additif dans la matière première en fusion,
   mélange de la matière première en fusion avec l'additif pour générer une matière à mouler, ladite matière à mouler étant disponible sous la forme d'un mélange formé par la matière première en fusion et l'additif,
   évacuation de la matière à mouler hors du dispositif d'alimentation,
   sachant que le chargement de l'additif dans la matière première en fusion est effectué dans un dispositif de dosage (3) qui est disposé dans un tronçon de conduit (29, 30) du dispositif d'alimentation (4) et/ou à la suite du dispositif d'alimentation (4), sachant que la matière première en fusion circule à travers le tronçon de conduit (29, 30) ou autour de celui-ci, et le dispositif de dosage comportant une pluralité d'éléments de dosage (31) disposés dans un évidement (32) du tronçon de conduit (29, 30), et sachant que l'additif est introduit via un conduit (36) dans un conduit annulaire (35) qui est en liaison avec les éléments de dosage (31), de telle sorte que l'additif venant du conduit annulaire (35) peut pénétrer via les éléments de dosage (31) dans le tronçon de conduit (29) rempli de la matière première en fusion et/ou dans le tronçon de conduit (30) autour duquel circule la matière première, **caractérisé en ce que** chaque élément de dosage est réalisé dans un matériau poreux et est totalement séparé des éléments de dosage adjacents, et chaque élément de dosage est entièrement entouré par le matériau de base du tronçon de conduit, et l'introduction de l'additif est effectuée via les éléments de dosage discrets, répartis sur la périphérie du tronçon de conduit.

2. Procédé selon la revendication 1, dans lequel, dans le tronçon de conduit (29, 30) qui constitue le dispositif de dosage (3) et dans au moins un tronçon de conduit (34) adjacent s'effectue le mélange de l'additif avec la matière première en fusion par l'intermédiaire d'au moins un élément mélangeur (24).

3. Procédé selon l'une quelconque des revendications précédentes, dans lequel la plastification et/ou la transformation de la matière première en une matière première en fusion sont effectuées au moyen d'un apport de chaleur vers la matière première, en particulier par l'intermédiaire d'un dispositif de chauffage, qui est disposé en particulier sur la paroi extérieure du cylindre (5) et/ou par l'introduction d'une énergie thermique via le dispositif d'alimentation, qui est réalisé sous la forme d'une extrudeuse.

4. Procédé selon l'une quelconque des revendications précédentes, dans lequel la matière à mouler est acheminée vers une machine de moulage par injection.

5. Procédé selon l'une quelconque des revendications précédentes, dans lequel la matière à mouler est transformée au moyen d'un procédé en continu, en particulier un procédé d'extrusion, encore mieux un procédé d'extrusion-soufflage, un procédé de moulage par soufflage-extrusion, un procédé d'extrusion pour feuilles soufflées, un procédé d'extrusion pour profilés, un procédé d'extrusion pour feuilles, un procédé d'extrusion pour tubes, un procédé d'extrusion pour plaques ou un procédé d'extrusion pour mousse ou un procédé pour la réalisation de caoutchouc silicone liquide (LSR).

6. Procédé selon l'une quelconque des revendications précédentes, dans lequel la matière à mouler est transformée par un procédé combiné de moulage par injection et d'extrusion, en particulier dans une machine Shot-Pot, en vue d'obtenir une pièce moulée.

7. Procédé selon l'une quelconque des revendications précédentes, dans lequel la matière à mouler est transformée en continu dans une unité d'injection pour obtenir un matériau tubulaire ou est injectée en discontinu dans une cavité d'un outil de moulage pour fabriquer des pièces moulées.

8. Procédé selon la revendication 8, dans lequel l'unité d'injection comporte un compartiment de compression et/ou un compartiment de stockage volumique, dans lequel un piston d'alimentation est déplacé de façon à faire varier périodiquement la taille du compartiment de compression et/ou du compartiment de stockage volumique.

9. Procédé selon l'une quelconque des revendications précédentes, dans lequel il est prévu, à la suite du dispositif de dosage (3), au moins une liaison (28), dans laquelle est effectué un dosage de la matière à mouler.

10. Procédé selon l'une quelconque des revendications précédentes, dans lequel la liaison (28) est en contact fluidique avec un piston d'alimentation (16), mobile en va-et-vient dans un cylindre d'alimentation (17), de telle sorte qu'une pression peut être générée à l'intérieur de la matière à mouler.

11. Procédé selon la revendication 10, dans lequel est commandée la vitesse de l'injection de la matière à mouler dans la cavité d'un outil de moulage et/ou du flux volumétrique de la matière à mouler à injecter au moyen d'une buse (21), qui est réalisée en particulier sous la forme d'une buse de régulation.

12. Procédé de réalisation d'une pièce moulée expansée selon l'une quelconque des revendications précédentes, comportant les étapes: mise en fusion d'un granulat polymère dans une extrudeuse pour obtenir une matière première en fusion, acheminement de la matière première en fusion vers le dispositif de dosage (3), admission d'un additif, en particulier un produit moussant, dans la matière première en fusion dans le dispositif de dosage (3), mélange de l'additif avec la matière première en fusion, sachant que pendant le processus de mélange, la pression est augmentée en continu, du fait que la matière en fusion est transportée en continu contre une buse (21) fermée, en particulier une buse à pointeau, qui obture une ouverture d'entrée dans une cavité (25) d'un outil de moulage (26), sachant que, lorsque la pression d'injection est atteinte, ladite buse s'ouvre ou est amenée en position ouverte pour laisser passer la matière à mouler vers la cavité (25) jusqu'à ce que la matière à mouler remplisse la cavité, et la pression de la matière à mouler diminue à tel point que le produit moussant dissous dans la matière à mouler est mis en expansion et on obtient une pièce moulée expansée.

**13.** Procédé selon la revendication 12, dans lequel l'additif comporte un produit moussant physique, qui pénètre dans le dispositif de dosage (3) en particulier à l'état gazeux, liquide ou surcritique.

**14.** Procédé selon la revendication 13, dans lequel l'additif entre sous pression dans le conduit annulaire (35) entourant le dispositif de dosage et, par l'intermédiaire des éléments de dosage (31), qui contiennent en particulier des capillaires ou sont réalisés dans un matériau poreux, est amené en contact avec la matière première en fusion qui circule le long desdits éléments.

**15.** Utilisation du procédé selon l'une quelconque des revendications précédentes, pour la réalisation de pièces moulées et/ou de feuilles ou d'un matériau tubulaire ou de corps creux en élastomères, en particulier en caoutchouc silicone liquide, et/ou en matières thermoplastiques et/ou en mousses de cire et/ou pour la transformation de produits alimentaires, tels que le chocolat.

Fig.1

# Fig.2

EP 1 892 034 B1

Fig.3

# Fig.4a

33  32 31   37   36  35      34   37   24      37   24

39

44      29   38

EP 1 892 034 B1

Fig. 4b

# Fig.5a

EP 1 892 034 B1

## Fig.5b

Fig.6

EP 1 892 034 B1

Fig.7

EP 1 892 034 B1

**EP 1 892 034 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19853021 A1
- US 20040080065 A
- DE 10150329 A1
- EP 06405129 A
- EP 1717008 A
- DE 2241367

- GB 989855 A
- US 2848739 A
- WO 2004037510 A1
- EP 06405123 A
- EP 1714767 A
- EP 1153650 A1